# EUROPÄISCHE PATENTSCHRIFT

(11) **EP 2 856 617 B1**
(45) Veröffentlichungstag und Bekanntmachung des Hinweises auf die Patenterteilung: **22.05.2019**
(21) Anmeldenummer: 12727592.3
(22) Anmeldetag: 24.05.2012
(51) Int. Cl.: H02K 5/20

(54) **KÜHLBARES MASCHINENGEHÄUSE**
COOLABLE MACHINE HOUSING
BÂTI DE MACHINE POUVANT ÊTRE REFROIDI

(43) Veröffentlichungstag der Anmeldung: 08.04.2015
(73) Patentinhaber: Baumüller Nürnberg GmbH, 90482 Nürnberg (DE)
(72) Erfinder: VEEH, Michael, 97271 Kleinrinderfeld (DE)
(74) Vertreter: FDST Patentanwälte
(86) Internationale Anmeldenummer: PCT/EP2012/002216
(87) Internationale Veröffentlichungsnummer: WO 2013/174406

(56) Entgegenhaltungen:
- DE-A1- 10 247 199
- DE-U1- 20 216 114
- DE-U1- 29 722 432

## Beschreibung

Die Erfindung betrifft ein kühlbares Maschinengehäuse gemäß dem Oberbgriff des Anspruchs 1 zur Aufnahme von Stator- und Rotor-Komponenten einer elektrischen Maschine. Ein derartiges Maschinengehäuse eines Elektriomotors ist aus der DE 297 22 432 U1 bekannt.

Aus der EP 1 554 793 B1 ist ein mit Tauchlack beschichteter kühlbarer Gehäusemantel für eine elektrische Maschine bekannt. In den als Aluminium-Gussteil hergestellten Gehäusemantel sind, zwischen dessen zylinderförmiger Innenwand und dessen Außenwand in Mantellängsrichtung verlaufend, eine Anzahl von Kühlkanälen paarweise integriert. Die in den Eckenbereichen des Gehäusemantels vorgesehenen Kühlkanäle sind an einer der Mantelstirnseiten des Gehäusemantels mittels einer Gusswand verschlossen und auf der gegenüberliegenden Mantelstirnseite von außen zugänglich, wobei die Mantelstirnseiten mittels Lagerschilden stirnseitig abdeckbar sind. Die Kühlkanäle kommunizieren über in Mantelquerrichtung verlaufende Verbindungskanäle miteinander, die während des Gießprozesses des Gehäusemantels mittels Sandkernen abgebildet werden.

Um einen prozesssicheren Ablauf zu gewährleisten, müssen bei dem bekannten Gussgehäuse die Sandkerne zuverlässig positioniert werden, da anderenfalls eine unerwünscht hohe Rate von Ausschussteilen aufgrund unzureichender Dichtheit des Gehäusemantels entstehen können. Derartige Undichtheiten werden teilweise erst beim fertigen Endprodukt mit der Folge aufwändiger Korrekturen bzw. Reparaturen festgestellt.

Der Erfindung liegt die Aufgabe zugrunde, unter Vermeidung der genannten Nachteile ein kühlbares Maschinengehäuse mit verbessertem Gehäusemantel anzugeben.

Diese Aufgabe wird erfindungsgemäß gelöst durch die Merkmale des Anspruchs 1. Vorteilhafte Ausgestaltungen und Weiterbildungen sind Gegenstand der Unteransprüche.

Hierzu ist der Gehäusemantel aus einem Strangpressprofil gebildet bzw. hergestellt, in das die Kühlkanäle paarweise als Kühlkanalpaare integriert sind. Verbindungen zwischen einzelnen Kühlkanälen der Kühlkanalpaare sind als Bohrungen ausgeführt, die mit deren Bohrungsöffnungen die Außenwandung des Gehäusemantels an exponierten Stellen durchsetzen. Die Bohrungsöffnungen der entsprechende Verbindungskanäle zwischen den Kühlkanälen bildenden Gehäusequerbohrungen werden mittels Verschlusselementen, vorzugsweise in Form von Verschlussschrauben verschlossen.

Die Ausgestaltung des Gehäusemantels ist geeigneterweise derart, dass vier Eckbereiche vergleichsweise großer Wanddicke und zwischen diesen vergleichsweise dünnwandige Wandbereiche gebildet sind. Die Außenwand des Gehäusemantels ist hierzu im Querschnitt zumindest annähernd quadratisch, also selbst etwa rechteckförmig mit vorzugsweise abgeflachten Außenecken ausgebildet, während die Innenwand im Wesentlichen zylinderförmig oder im Querschnitt zumindest ebenfalls etwa quadratisch mit abgerundeten Inneneckbereichen ist. Zweckmäßigerweise sind die Kühlkanäle in die dadurch hergestellten vergleichsweise dickwandigen Eckbereiche eingebracht, wobei in jedem Eckbereich ein Kühlkanalpaar vorgesehen ist.

Die Kühlkanäle treten an beiden Mantelstirnseiten des Gehäusemantels aus bzw. münden dort ein oder aus. Dabei ist zwischen den Kühlkanälen jedes Kühlkanalpaares ein Kanal- oder Manteltrennsteg gebildet. Jeder dieser Kanaltrennstege erstreckt sich in Gehäuselängsrichtung ausgehend von einer ersten Mantelstirnseite ununterbrochen bis zur gegenüberliegenden zweiten Mantelstirnseite und ist lediglich dort unter Bildung eines Durchgangskanals unterbrochen. Die als Bohrungen ausgeführten Verbindungskanäle sind vorzugsweise im Bereich der ersten Mantelstirnseite, die geeigneterweise bezogen auf das Maschinengehäuse die A-Seite bildet, vorgesehen, während die Durchgangsbohrungen auf der gegenüberliegenden zweiten Mantelstirnseite vorgesehen sind, die dann bezogen auf das Maschinengehäuse die B-Seite darstellt.

Die den jeweiligen Verbindungskanal bildende Bohrung durchsetzt die Außenwand ausgehend von der dadurch gebildeten Bohrungsöffnung sowie den Kanaltrennsteg des der Bohrungsöffnung nächstgelegenen Kühlkanalpaares und erstreckt sich in Gehäusequerrichtung durch den vergleichsweise dünnwandigen Mantelbereich des Gehäusemantels hindurch, um in den nächstgelegenen Kühlkanal des Kühlkanalpaares im benachbarten Eckbereich des Gehäusemantels einzumünden. Auf diese Art und Weise sind geeigneterweise insgesamt drei Bohrungen zur Bildung einer entsprechenden Mindestanzahl an Verbindungskanälen gebildet.

Die Verbindung der Kühlkanäle eines jeden Kühlkanalpaares auf der den Bohrungen bzw. Verbindungskanälen gegenüberliegenden Mantelstirnseite, die bezogen auf das Maschinengehäuse die B-Seite darstellt, erfolgt über die dort in die Kanaltrennstege eingebrachten Durchgangskanäle. Auf diese Weise ist innerhalb des Gehäusemantels ein Kanalsystem mit untereinander verbundenen Kühlkanälen gebildet, die von einem Kühlmedium in dessen Strömungsrichtung nacheinander durchströmt werden.

Das Kühlmedium tritt dabei über eine Eintrittsöffnung, die vorzugsweise im Bereich der ersten Mantelstirnseite (A-Seite) vorgesehen ist, ein und über eine vorzugsweise ebenfalls dort vorgesehene Austrittsöffnung aus. Die Ein- und Austrittsöffnung durchsetzen wiederum die Außenwandung des Gehäusemantels, treten jedoch in unterschiedliche Kühlkanäle zweier benachbarter Kühlkanalpaare ein. Die Ein- und Austrittsöffnung sind bevorzugt auf der gleichen Mantelseite des geeigneterweise rechteckförmigen und somit im Querschnitt quadratischen Gehäusemantels angeordnet und dabei zueinander um den Abstand zwischen zwei Kühlkanälen benachbarter Kühlkanalpaare beabstandet.

Die mantelstirnseitigen Ein- oder Ausmündungen der Kühlkanäle sind vorzugsweise paarweise mittels Flachdichtungen abgedeckt. Es sind somit geeigneterweise sowohl auf der ersten Mantelstirnseite (A-Seite) als auch auf der zweiten Mantelstirnseite (B-Seite) des Gehäusemantels jeweils vier Flachdichtungen vorgesehen.

Gemäß einer besonders bevorzugten Ausführungsform sind in die quasi nach Art von Flanschen oder Flansch-Flächen sich darstellenden Mantelstirnseiten sickenartige Vertiefungen eingebracht, deren Sickenkontur an die Außenkontur der Flachdichtungen angepasst ist. Im Montagezustand liegen die Flachdichtungen in diesen Vertiefungen ein und werden vermittels der Lagerschilder des Maschinengehäuses gegen den Gehäusemantel gepresst sowie hierbei geeigneterweise elastisch verformt, so dass eine besonders zuverlässige Dichtwirkung gewährleistet ist.

Die vermittels der Flachdichtungen stirnseitig dicht verschlossenen Kühlkanäle sind somit lediglich über die in Gehäusequerrichtung verlaufenden Verbindungskanäle einerseits sowie auf der gegenüberliegenden Mantelstirnseite des Gehäusemantels über die dortigen Durchbrüche oder Durchgangskanäle in den Kanaltrennstegen andererseits selektiv miteinander verbunden. Ein über die Eintrittsöffnung in das dadurch gebildete Kanalsystem eintretendes Kühlmedium durchströmt aufgrund der entsprechenden Anordnung der paarweisen Kühlkanäle und der Verbindungskanäle sowie der Durchgangskanäle zunächst einen Kühlkanal eines ersten Kühlkanalpaares und in Folge einer Umlenkung über den Durchgangskanal den weiteren Kühlkanal desselben Kühlkanalpaares, um anschließend einen der Verbindungskanäle zum nächsten Kühlkanalpaar zu durchströmen. Auf diese Weise werden alle Kühlkanäle der Kühlkanalpaare nacheinander durchströmt und das Kühlmittel tritt anschließend über die Austrittsöffnung aus.

Die mit der Erfindung erzielten Vorteile bestehen insbesondere darin, dass durch Verwendung eines aus einem Strangpressprofil hergestellten Gehäusemantels mit integrierten Kühlkanälen und hierzu quer verlaufenden Verbindungskanälen in Form von eingebrachten Bohrungen eine zuverlässige Kühlung bei gleichzeitig hoher Dichtigkeit des Kühlsystems erzielt sind. Zudem sind enge Fertigungstoleranzen und hohe Oberflächengüten erreichbar. Die Lagerschilde übernehmen in Verbindung mit den einzelnen Flachdichtungen, die die Kühlkanäle stirnseitig verschließen, die Funktion und Aufgabe eines bisher üblichen Druckrings. Der als Strangpressprofil ausgeführte Gehäusemantel weist ferner gegenüber einem Gussteil eine vergleichsweise geringe Porositäten und keine oder zumindest lediglich vergleichsweise wenige Fehlstellen und damit praktisch keine Materialfehler auf.

Nachfolgend werden Ausführungsbeispiele der Erfindung anhand einer Zeichnung näher erläutert. Darin zeigen:
- Fig. 1: perspektivisch einen kühlbaren Gehäusemantel einer elektrischen Maschine mit axialen Kühlkanälen,
- Fig. 2: das Maschinengehäuse einer elektrischen Maschine mit einem Gehäusemantel gemäß Fig. 1 und stirnseitigen Lagerschilden in Draufsicht auf eine Eintrittsöffnung und eine Austrittsöffnung in ein die Kühlkanale umfassendes Kanalsystem des Gehäusemantels,
- Fig. 3: einen Querschnitt entlang der Linie III-III in Fig. 2 mit (Quer-)Bohrungen zur Verbindung der Kühlkanäle,
- Fig. 4: einen Querschnitt entlang der Linie IV-IV in Fig. 2 mit gehäuseinnenseitig einem gezahnten Statorkern,
- Fig. 5: einen Querschnitt entlang der Linie V-V in Fig. 2 mit über Durchgangskanälen verbundenen Kühlkanälen jeweiliger Kühlkanalpaare,
- Fig. 6: in Stirnseitenansicht auf die (A-seitige) Mantelstirnseite des Gehäusemantels bei abgenommenem Lagerschild mit Blick auf drei in Vertiefungen einliegenden Flachdichtungen und einer Vertiefung bei entnommener Flachdichtung, und
- Fig. 7: in einer Darstellung gemäß Fig. 6 eine Flachdichtungs-Anordnung auf der (B-seitigen) Mantelstirnseite des Gehäusemantels.

Einander entsprechende Teile sind in allen Figuren mit den gleichen Bezugszeichen versehen.

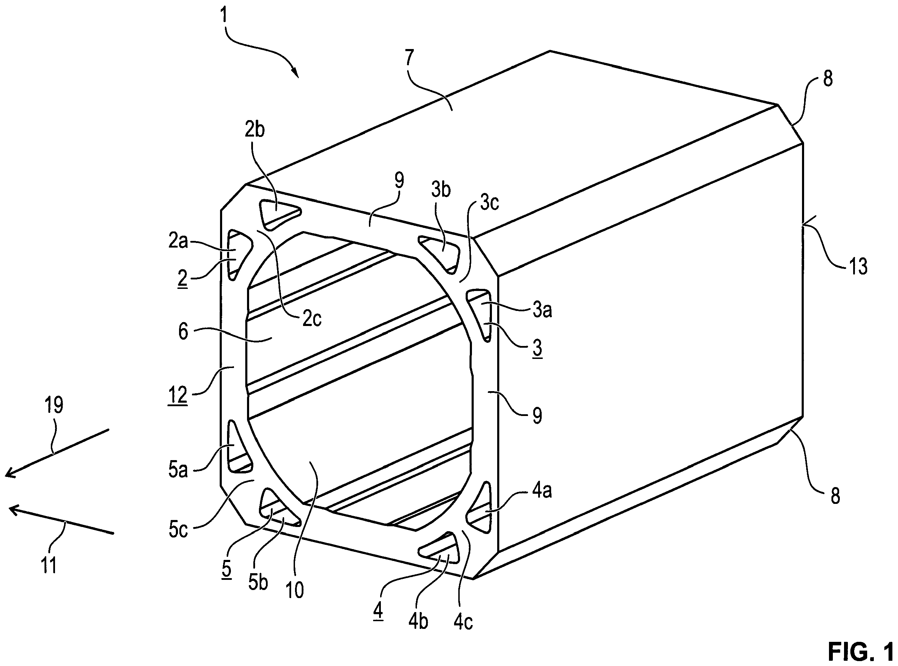

Fig. 1 zeigt einen Gehäusemantel 1, der als Strangpressprofil mit integrierten Kühlkanälen 2a bis 5b ausgeführt ist. Die Kühlkanäle 2a bis 5b sind paarweise als Kühlkanalpaare 2 bis 5 in der Wandung des eine Innenwand 6 und eine Außenwand 7 aufweisenden Gehäusemantel 1 angeordnet. Gegenüber vergleichsweise dickwandigen Eckbereichen 8 sind die dazwischen liegenden mittleren Wandbereiche oder mantelabschnitte 9 des Gehäusemantels 1 vergleichsweise dünnwandig. Hierzu ist die Außenwand 7 etwa quaderförmig und somit im Querschnitt etwa quadratisch, wobei die Eckbereiche 8 außenseitig abgeflacht sind. Die Innenwandung 6 ist im Querschnitt ebenfalls etwa quadratisch und mit abgerundeten Innenecken 10 ausgeführt.

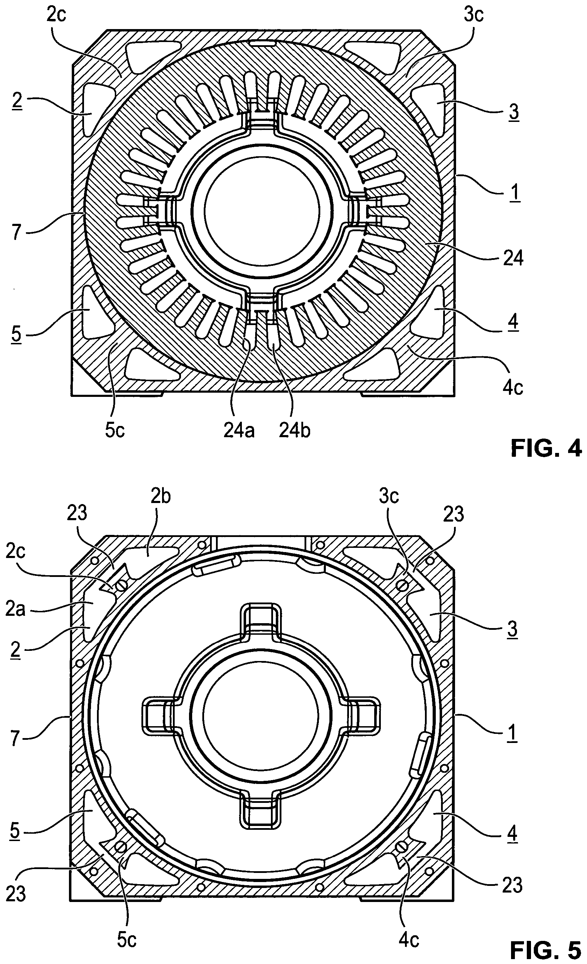

Die Kühlkanäle 2a bis 5b der Kühlkanalpaare 2 bis 5 erstrecken sich axial in Gehäuselängsrichtung 11 zwischen zwei Mantelstirnseiten 12, 13 des Gehäusemantels 1 und verlaufen zueinander parallel. Zur Trennung der Kühlkanäle der Kühlkanalpaare 2 bis 5 sind Material- oder Kanaltrennstege 2c bis 5c zwischen den Kühlkanälen 2a, 2b und 3a, 3b sowie 4a, 4b bzw. 5a, 5b im Strangpressprofil belassen. Diese Materialstege 2c bis 5c enden auf der nachfolgend auch als A-Seite bezeichneten ersten Mantelstirnseite 12 ununterbrochen, sind jedoch auf der gegenüber liegenden, nachfolgend auch als B-Seite bezeichneten zweiten Mantelstirnseite 13 unterbrochen (Fig. 5).

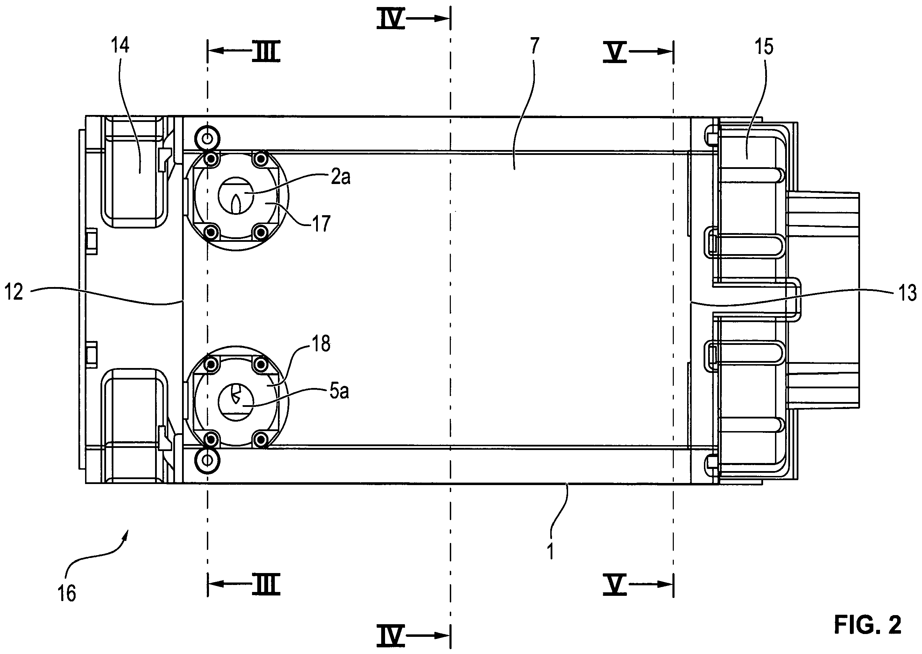

Fig. 2 zeigt den mit stirnseitigen Lagerschilden 14, 15 zu einem Maschinengehäuse 16 montierten Gehäusemantel 1. Das Lagerschild (A-Lagerschild) 14 ist an die (A-seitige) Mantelstirnseite 12 des Gehäusemantels 1 montiert, während gegenüber liegend an der (B-seitigen) Mantelstirnseite 13 des Gehäusemantels 1 das Lagerschild (B-Lagerschild) 15 montiert ist. Im Bereich der A-seitigen Mantelstirnseite 12 sind eine Eintrittsöffnung 17 und beabstandet hierzu eine Austrittsöffnung 18 für ein Kühlmittel vorgesehen. Die Eintrittsöffnung 17 mündet im Ausführungsbeispiel in den Kühlkanal 2a, während der Kühlkanal 5a in die Austrittsöffnung 18 ausmündet.

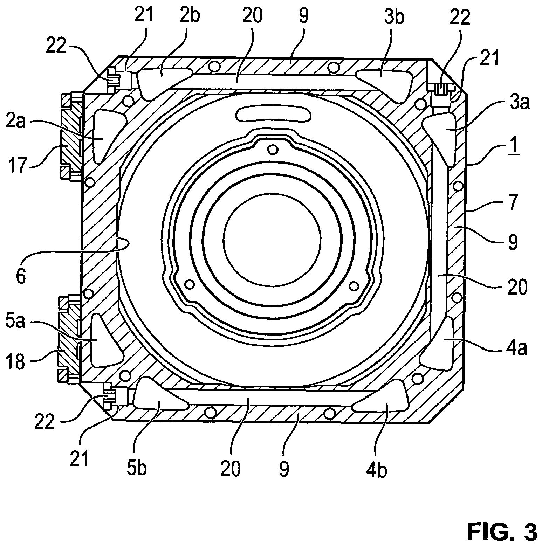

Fig. 3 zeigt in vergrößerter Darstellung einen Querschnitt des Gehäusemantels 1 im Bereich der A-seitigen Mantelstirnseite 12. Erkennbar sind zu den Kühlkanälen bzw. Kühlkanalpaaren 2 bis 5 senkrecht und somit in Gehäusequerrichtung 19 (Fig. 1) verlaufende Bohrungen 20 innerhalb der vergleichsweise dünnwandigen Wandbereich bzw. -abschnitte 9 des Gehäusemantels 1. Die Bohrungen 20 durchsetzen diese dünnwandigen Wandbereiche 9 unter Verbindung zweier einander direkt gegenüber liegender Kühlkanäle benachbarter Kühlkanalpaare, im Ausführungsbeispiel der Kühlkanalpaare 2 und 3, 3 und 4 sowie 4 und 5. Die Bohrungen 20 durchsetzen an den gezeigten exponierten Positionen die Außenwandung 7 des Gehäusemantels 1 unter Bildung von entsprechenden Bohrungsöffnungen 21. Diese sind mittels Verschlusselementen 22 in Form beispielsweise von Verschlussschrauben dichtend verschlossen. Durch diese Bohrungen 20 sind somit Verbindungskanäle zwischen einzelnen Kühlkanälen - vorliegend den Kühlkanälen 2b, 3b und 3a, 4a sowie 4b - im Bereich der A-seitigen Mantelstirnseite 12 des Gehäusemantels 1 hergestellt.

Die Fig. 4 und 5 zeigen weitere, ebenfalls vergrößerte Querschnitte des Gehäusemantels 1. Dabei repräsentiert Fig. 5 analog zu Fig. 3 den B-seitigen Bereich der (zweiten) Mantelstirnseite 13. Erkennbar sind dort die Mantelstege 2c bis 5c zwischen den Kühlkanälen der jeweiligen Kühlkanalpaare 2 bis 5 unter Bildung von Durchgangskanälen 23 unterbrochen. Aufgrund der Verbindung über die nachfolgend auch als Verbindungskanäle bezeichneten Bohrungen 20 können alle Kühlkanäle 2a bis 5b untereinander kommunizieren. Dabei sind die Kühlkanäle aufgrund der unterschiedlichen Positionierung der Verbindungskanäle 20 auf der A-seitigen Mantelstirnseite 12 einerseits und der Durchgangskanäle 23 auf der gegenüber liegenden B-seitigen Mantelstirnseite 13 andererseits in Strömungsrichtung eines Kühlmittels praktisch hintereinander geschaltet und werden daher als Kühlkanalsystem nach Eintritt des Kühlmittels über die Eintrittsöffnung 17 nacheinander durchströmt, woraufhin das Kühlmittel über die Austrittsöffnung 18 abströmt.

In Fig. 4 ist erkennbar, dass die Mantel- oder Kanaltrennstege 2c bis 5c zwischen der A-seitigen Mantelstirnseite 12 und den Durchgangskanälen 23 im Bereich der gegenüber liegenden B-seitigen Mantelstirnseite 13 in Gehäuselängsrichtung 11 entlang des Gehäusemantels 1 in dem Sinne ununterbrochen sind, dass mit Ausnahme der Durchgangskanäle 23 keine weiteren Verbindungen zwischen den beiden Kühlkanälen der jeweiligen Kühlkanalpaare 2 bis 5 vorhanden sind.

Fig. 4 veranschaulicht zudem einen in das Maschinengehäuse 16 und dort in den Gehäusemantel 1 eingebrachten Stator in Form beispielsweise eines Statorblechpaketes mit umfangsseitig alternierend einer Vielzahl von Statorzähnen 24a und Statornuten 24b zur Aufnahme von Windungen oder Spulen einer Feldwicklung der elektrischen Maschine, die ein Motor oder ein Generator sein kann.

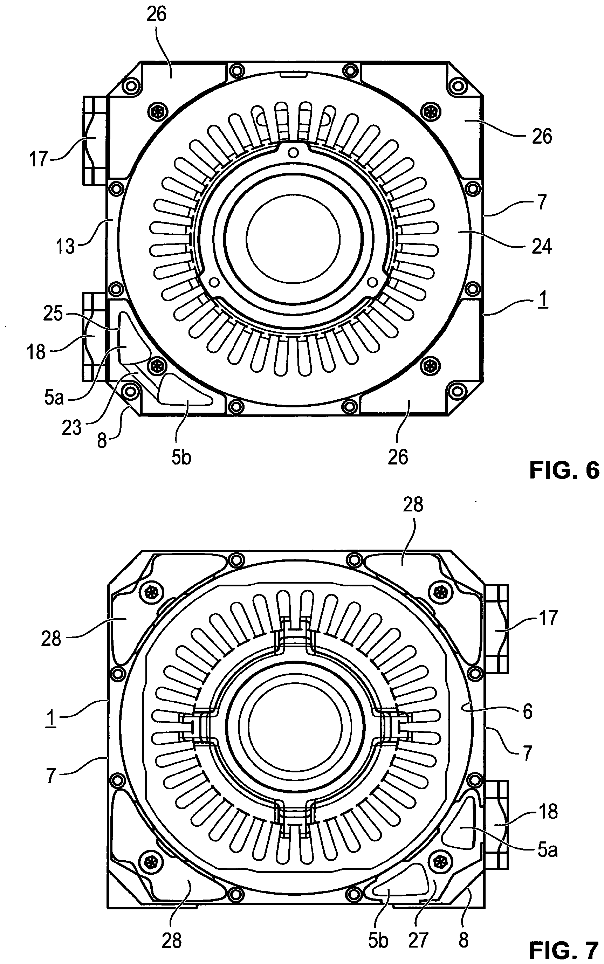

In Fig. 6 ist das Maschinengehäuse 16 bei abgenommenem B-seitigem Lagerschild 15 gezeigt. In die dortige Mantelstirnseite 13 sind im Bereich der Kühlkanalpaare 2 bis 5 sickenartige Vertiefungen 25 eingebracht. In diese sind flexible, elastische Flachdichtungen 26 eingelegt, die die dortigen Kühlkanäle 2a bis 5b der jeweiligen Kühlkanalpaare 2 bis 5 abdecken. Im Zuge der Montage des B-Lagerschildes 15 werden die Flachdichtungen 26 stirnseitig an das Mantelgehäuse 1 und somit an den Gehäusemantel 1 gepresst sowie dabei elastisch verformt, so dass eine zuverlässige Dichtwirkung gewährleistet ist.

Eine entsprechende Dichtungsanordnung ist auch auf der A-seitigen Mantelstirnseite 12 des Gehäusemantels 1 vorgesehen. So sind dort in der A-seitige Mantelstirnseite 12 im Bereich der Kühlkanalpaare 2 bis 5 ebenfalls sickenartige Vertiefungen 27 vorgesehen, in die wiederum flexible, elastische Flachdichtungen 28 eingelegt sind. Im Zuge der Montage des A-Lagerschildes 14 werden diese Flachdichtungen 28 ebenfalls an den Gehäusemantel 1 gepresst und dabei zur Herstellung einer zuverlässigen Dichtwirkung wiederum elastisch verformt.

Die Erfindung ist nicht auf das vorstehend beschriebene Ausführungsbeispiel beschränkt. So kann die Querschnittsform des Gehäusemantels 1 sowohl hinsichtlich dessen Außenwand 7 als auch dessen Innenwand 6 von der dargestellten Form abweichen. Beispielsweise kann die Innenwand zylinderförmig sein. Auch ist es nicht erforderlich, dass die Wanddicke des Gehäusemantels 1 in Umfangsrichtung zu den Eckbereichen hin zunimmt bzw. zwischen den Eckbereichen 8 vergleichsweise dünnwandig ist. Vielmehr kann die Wandung des Gehäusemantels 1 in Umfangsrichtung gleichmäßig sein. Wichtig ist, dass Kühlkanalpaare 2 bis 5 vorgesehen sind, die in Gehäusequerrichtung 19 vorzugsweise äquidistant zueinander beabstandet sind derart, dass eine möglichst gleichmäßige Kühlung des Gehäusemantels 1 und damit des Maschinengehäuses 16 erzielt wird.

Auch können prinzipiell die in Gehäusequerrichtung 19 verlaufenden und die Verbindungskanäle bildenden Bohrungen 20 auf der B-Seite und die die Durchgangskanäle 23 bildenden Unterbrechungen der Kanaltrennstege 2c bis 5c auf der A-Seite des Gehäusemantels 1 vorgesehen sein.

### Bezugszeichenliste

- 1: Gehäusemantel
- 2-5: Kühlkanalpaar
- 2a-5b: Kühlkanal
- 6: Innenwand
- 7: Außenwand
- 8: Eckbereich
- 9: Wandbereich/-abschnitt
- 10: Innenecken
- 11: Gehäuselängsrichtung
- 12: A-seitige (erste) Mantelstirnseite
- 13: B-seitige (zweite) Mantelstirnseite
- 14: A-Lagerschild
- 15: B-Lagerschild
- 16: Maschinengehäuse
- 17: Eintrittsöffnung
- 18: Austrittsöffnung
- 19: Gehäusequerrichtung
- 20: Bohrung/Verbindungskanal
- 21: Bohrungsöffnung
- 22: Verschlusselement/-schraube
- 23: Durchgangskanal
- 24: Stator
- 24a: Statorzahn
- 24b: Statornut
- 25: B-seitige Vertiefung
- 26: Flachdichtung
- 27: A-seitige Vertiefung
- 28: Flachdichtung

## Patentansprüche

1. Maschinengehäuse (16) zur Aufnahme von Stator- und Rotor-Komponenten (24) einer elektrischen Maschine, mit einem eine Innenwand (6) und eine Außenwand (7) sowie ein erste Mantelstirnseite (12) und eine dieser gegenüberliegende zweite Mantelstirnseite (13) aufweisenden Gehäusemantel (1), der mittels Lagerschilden (14, 15) stirnseitig abdeckbar ist, wobei in den Gehäusemantel (1) zwischen dessen Innenwand (6) und dessen Außenwand (7) eine Anzahl von axialen Kühlkanälen (2a bis 5b) eingebracht sind, die sich paarweise als Kühlkanalpaare (2 bis 5) in Gehäuselängsrichtung (11) zwischen den Mantelstirnseiten (12,13) erstrecken und mittels Verbindungskanälen (20) kommunizieren, wobei die in den aus einem Strangpressprofil gebildeten Gehäusemantel (1) integrierten Kühlkanäle (2a bis 5b) untereinander mittels in Gehäusequerrichtung (19) verlaufenden Verbindungskanälen (20) kommunizieren, die als Bohrungen ausgeführt sind, welche die Außenwand (7) als Bohrungsöffnung (21) durchsetzen, die mittels Verschlusselementen (22) verschlossen sind, **dadurch gekennzeichnet dass** die als Bohrungen ausgeführten Verbindungskanäle (20) einen ersten Kühlkanal (2b, 3a, 5b) eines ersten Kühlkanalpaares (2, 3 bzw. 5) in Gehäusequerrichtung (19) durchsetzen und in einen zweiten Kühlkanal (3b, 4a, 4b) eines gegenüberliegend verlaufenden zweiten Kühlkanalpaares (3, 4) einmünden.

2. Maschinengehäuse (16) nach Anspruch 1,
**dadurch gekennzeichnet,**
**dass** die Kühlkanäle (2a bis 5b) an der jeweiligen Mantelstirnseite (12, 13) des Gehäusemantels (1) ein- oder ausmünden.

3. Maschinengehäuse (16) nach Anspruch 1 oder 2,
**dadurch gekennzeichnet,**
**dass** zwischen den Kühlkanälen (2a bis 5b) des jeweiligen Kühlkanalpaares (2 bis 5) ein Kanaltrennsteg (2c bis 5c) in Gehäuselängsrichtung (11) verläuft, der im Bereich der ersten Mantelstirnseite (12) ununterbrochen und im Bereich der gegenüberliegenden zweiten Mantelstirnseite (13) unter Bildung eines Durchgangskanals (23) unterbrochen ist.

4. Maschinengehäuse (16) nach Anspruch 3,
**dadurch gekennzeichnet,**
**dass** die als Bohrungen ausgeführten Verbindungskanäle (20) im Bereich der den Durchgangskanälen (23) gegenüberliegenden ersten Mantelstirnseite (12) vorgesehen sind.

5. Maschinengehäuse (16) nach einem der Ansprüche 1 bis 4,
**dadurch gekennzeichnet,**
**dass** im Bereich der ersten Mantelstirnseite (12) eine Eintrittsöffnung (17) und eine Austrittsöffnung (18) vorgesehen sind, von denen jede die Außenwand (7) durchsetzt und in jeweils einen der Kühlkanäle (2a, 5b) ein- bzw. ausmündet.

6. Maschinengehäuse (16) nach einem der Ansprüche 1 bis 5,
**dadurch gekennzeichnet,**
**dass** die mantelstirnseitigen Ein- oder Ausmündungen der Kühlkanäle (2a bis 5b) mittels Flachdichtungen (26, 28), insbesondere einer der Anzahl der Kühlkanalpaare (2 bis 5) entsprechenden Anzahl von Flachdichtungen (26, 28), abgedeckt sind.

7. Maschinengehäuse (16) nach Anspruch 6,
**dadurch gekennzeichnet,**
**dass** in die erste Mantelstirnseite (12) im Bereich der dortigen Kühlkanäle (2a bis 5b) eine der Anzahl der Kühlkanalpaare (2 bis 5) entsprechende Anzahl von Vertiefungen (25) eingebracht sind, in welche die Flachdichtungen (26) zum stirnseitigen Verschließen der Kühlkanäle (2a bis 5b) eingelegt sind.

8. Maschinengehäuse (16) nach Anspruch 6 oder 7,
**dadurch gekennzeichnet,**
**dass** in die zweite Mantelstirnseite (13) im Bereich der dortigen Kühlkanäle (2a bis 5b) eine der Anzahl der Kühlkanalpaare (2a bis 5b) entsprechende Anzahl von Vertiefungen (27) eingebracht sind, in welche die Flachdichtungen (28) zum stirnseitigen Verschließen der Kühlkanäle (2a bis 5b) eingelegt sind.

9. Maschinengehäuse (16) nach einem der Ansprüche 6 bis 8,
**dadurch gekennzeichnet,**
**dass** die Flachdichtungen (26, 28) zwischen der jeweiligen Mantelstirnseite (12, 13) und dem diesem zugeordneten Lagerschild (14 bzw. 15) unter stirnseitiger Abdichtung der Kühlkanäle (2a bis 5b) eingepresst sind.

## Claims

1. Machine housing (16) for receiving stator components and rotor components (24) of an electrical machine, having a housing shell (1) that comprises an inner wall (6) and an outer wall (7) and also a first shell end face (12) and a second shell end face (13) that lies opposite said first shell end face, and said housing shell can be covered at each end face by means of the bearing end plates (14, 15) respectively, wherein a number of axial cooling ducts (2a to 5b) are incorporated in the housing shell (1) between its inner wall (6) and its outer wall (7) and said cooling ducts extend in pairs as cooling duct pairs (2 to 5) in the longitudinal direction (11) of the housing between the shell end faces (12, 13) and communicate by means of connecting ducts (20), wherein the cooling ducts (2a to 5b) integrated in the housing shell (1) formed from an extruded section communicate with one another by means of connecting ducts (20) that extend in the transverse direction (19) of the housing, which connecting ducts are embodied as boreholes that penetrate the outer wall (7) as borehole opening (21) and are closed by means of the closing elements (22) **characterized in that** the connecting ducts (20) that are embodied as boreholes penetrate a first cooling duct (2b, 3a, 5b) of a first cooling duct pair (2, 3 and accordingly 5) in the transverse direction (19) of the housing and issue into a second cooling duct (3b, 4a, 4b) of an opposite lying second cooling duct pair (3, 4).

2. Machine housing (16) according to Claim 1,
**characterized in that**
the cooling ducts (2a to 5b) enter or exit at the respective shell end face (12, 13) of the housing shell (1).

3. Machine housing (16) according to Claims 1 or 2,
**characterized in that**
a duct separating web (2c to 5c) extends in the longitudinal direction (11) of the housing between the cooling ducts (2a to 5b) of the respective cooling duct pair (2 to 5), said duct separating web being uninterrupted in the region of the first shell end face (12) and being interrupted in the region of the opposite lying second shell end face (13) whilst forming a through-going duct (23).

4. Machine housing (16) according to Claim 3,
**characterized in that**
the connecting ducts (20) that are embodied as boreholes are provided in the region of the first shell end face (12) that lies opposite the through-going ducts (23).

5. Machine housing (16) according to any one of Claims 1 to 4,
**characterized in that**
an inlet opening (17) and an outlet opening (18) are provided in the region of the first shell end face (12) and each of said openings penetrate the outer wall (7) and issue into and accordingly out of the cooling ducts (2a, 5b).

6. Machine housing (16) according to any one of Claims 1 to 5,
**characterized in that**
the 'shell end face end' inlets or outlets of the cooling ducts (2a to 5b) are covered by means of planar seals (26,28), in particular a number of planar seals (26, 28) which corresponds to the number of the cooling duct pairs (2 to 5).

7. Machine housing (16) according to Claim 6,
**characterized in that**
a number of depressions (25) are incorporated in the first shell end face (12) in the region of the respective cooling ducts (2a to 5b), said number of depressions corresponding to the number of the cooling duct pairs (2 to 5) and the planar seals (26) are placed in said depressions for the purpose of closing the cooling ducts (2a to 5b) at their end face.

8. Machine housing (16) according to Claim 6 or 7,
**characterized in that**
a number of depressions (27) are incorporated in the second shell end face (13) in the region of the respective cooling ducts (2a to 5b), said number of depressions corresponding to the number of the cooling duct pairs (2a to 5b) and the planar seals (28) are placed in said depressions for the purpose of closing the cooling ducts (2a to 5b) at their end face.

9. Machine housing (16) according to any one of Claims 6 to 8,
**characterized in that**
the planar seals (26, 28) are pressed between the respective shell end face (12, 13) and the bearing end plate (14 or accordingly 15) allocated thereto, whilst sealing the end face of the cooling ducts (2a to 5b).

## Revendications

1. Bâti de machine (16) destiné à recevoir des composants de stator et de rotor (24) d'une machine électrique, comprenant une enveloppe (1) de bâti qui présente une paroi intérieure (6) et une paroi extérieure (7) ainsi qu'une première face frontale (12) d'enveloppe et, en vis-à-vis de celle-ci, une seconde face frontale (13) d'enveloppe, laquelle enveloppe de bâti peut être recouverte côté face frontale au moyen de flasques (14, 15), dans lequel un certain nombre de canaux de refroidissement (2a à 5b) axiaux sont ménagés dans l'enveloppe (1) de bâti entre sa paroi intérieure (6) et sa paroi extérieure (7), lesquels canaux de refroidissement s'étendent par paires sous forme de paires de canaux de refroidissement (2 à 5) dans la direction longitudinale (11) du bâti entre les faces frontales (12, 13) de l'enveloppe et communiquent au moyen de canaux (20) de jonction, dans lequel les canaux de refroidissement (2a à 5b) intégrés dans l'enveloppe (1) de bâti composée d'un profilé extrudé communiquent entre eux au moyen de canaux de jonction (20) s'étendant dans la direction transversale (19) du bâti, qui sont réalisés sous la forme de trous traversant la paroi extérieure (7) en tant que trous de passage (21) qui sont fermés au moyen d'éléments de fermeture (22),
**caractérisé en ce que** les canaux de jonction (20) réalisés sous forme de trous traversent un premier canal de refroidissement (2b, 3a, 5b) d'une première paire de canaux de refroidissement (2, 3 ou 5) dans la direction transversale (19) du bâti et débouchent dans un second canal de refroidissement (3b, 4a, 4b) d'une seconde paire de canaux de refroidissement (3, 4) s'étendant de manière opposée.

2. Bâti de machine (16) selon la revendication 1, **caractérisé en ce que** les canaux de refroidissement (2a à 5b) débouchent dans la face frontale (12, 13) d'enveloppe respective de l'enveloppe (1) du bâti ou hors de celle-ci.

3. Bâti de machine (16) selon la revendication 1 ou 2, **caractérisé en ce qu'**entre les canaux de refroidissement (2a à 5b) de la paire respective de canaux de refroidissement (2 à 5) s'étend, dans la direction longitudinale (11) du bâti, une nervure de séparation de canal (2c à 5c), qui est interrompue dans la région de la première face frontale (12) et dans la région de la seconde face frontale (13) opposée en formant un canal traversant (23).

4. Bâti de machine (16) selon la revendication 3, **caractérisé en ce que** les canaux de jonction (20) réalisés sous forme de trous sont prévus dans la région de la première face frontale (12) du bâti qui est opposée aux canaux traversants (23).

5. Bâti de machine (16) selon l'une des revendications 1 à 4, **caractérisé en ce qu'**il est prévu dans la région de la première face frontale (12) du bâti une ouverture d'entrée (17) et une ouverture de sortie (18) dont chacune traverse la paroi extérieure (7) et débouche respectivement dans un canal de refroidissement (2a, 5b) ou hors de celui-ci.

6. Bâti de machine (16) selon l'une des revendications 1 à 5, **caractérisé en ce que** les ouvertures d'entrée ou de sortie des canaux de refroidissement (2a à 5b) côté face avant de l'enveloppe sont recouvertes au moyen de joints plats (26, 28), notamment d'un nombre de joints plats (26, 28) correspondant au nombre de paires de canaux de refroidissement (2 à 5).

7. Bâti de machine (16) selon la revendication 6, **caractérisé en ce qu'**un nombre de creux (25) correspondant au nombre de paires de canaux de refroidissement (2 à 5) sont ménagés dans la première face frontale (12) de l'enveloppe, dans la région des canaux de refroidissement (2a à 5b) qui s'y trouvent, creux dans lesquels les joints plats (26) sont introduits pour fermer les canaux de refroidissement (2a à 5b) côté face frontale.

8. Bâti de machine (16) selon la revendication 6 ou 7, **caractérisé en ce qu'**un nombre de creux (27) correspondant au nombre de paires de canaux de refroidissement (2a à 5b) sont ménagés dans la seconde face frontale (13) de l'enveloppe, dans la région des canaux de refroidissement (2a à 5b), creux dans lesquels les joints plats (28) sont introduits pour fermer les canaux de refroidissement (2a à 5b) côté face frontale.

9. Bâti de machine (16) selon l'une des revendications 6 à 8, **caractérisé en ce que** les joints plats (26, 28) sont pressés entre la face frontale (12, 13) d'enveloppe respective et la flasque (14 ou 15) qui lui est associée en étanchéifiant les canaux de refroidissement (2a à 5b) côté face frontale.
